# EUROPÄISCHE PATENTSCHRIFT

(11) **EP 2 447 129 B1**
(45) Veröffentlichungstag und Bekanntmachung des Hinweises auf die Patenterteilung: **01.05.2013**
(21) Anmeldenummer: 11187391.5
(22) Anmeldetag: 01.11.2011
(51) Int. Cl.: B61D 17/10, B61D 17/20, B60D 5/00

(54) **Verbindungselement für Bodenelemente von Fahrzeugen**
Connecting element for floor elements of vehicles
Elément d'assemblage pour éléments de sol de véhicules

(30) Priorität: 02.11.2010 DE 102010050005; 28.01.2011 DE 102011009767
(43) Veröffentlichungstag der Anmeldung: 02.05.2012
(73) Patentinhaber: Bombardier Transportation GmbH, 10785 Berlin (DE)
(72) Erfinder: Paldan, Frantisek, 83107 Bratislava (SK); Geyer, Vladimir, 851007 Bratislava (SK); Gschweitl, Michael, 1110 Wien (AT)
(74) Vertreter: Beyer, Andreas

(56) Entgegenhaltungen:
- EP-A1- 1 854 691
- WO-A1-86/00588
- WO-A1-2011/020245
- DE-C1- 19 860 557

## Beschreibung

Die vorliegende Erfindung betrifft ein Verbindungselement zur Verbindung von Bodenelementen eines Fahrzeugs, eine Anordnung aus einem ersten Bodenelement, einem zweiten Bodenelement und einem Verbindungselement, sowie ein Schienenfahrzeug, das ein solches Verbindungselement oder eine solche Anordnung aufweist.

Fahrzeuge des öffentlichen Personennah- und Fernverkehrs, insbesondere Busse und Schienenfahrzeuge, weisen Fußböden aus mehreren miteinander verbundenen Bodenelementen auf. Mehrere Bodenelemente sind schon aufgrund der bauartbedingten Länge solcher Fahrzeuge erforderlich.

Im Bereich des Gelenks von Gelenkbussen und im Bereich des Gelenks zwischen verschiedenen Wagen eines Schienenfahrzeugs sind auf dem Boden sogenannte Drehscheiben angeordnet, die, als besonderes Bodenelement, im Übergangsbereich horizontal drehbar geführt sind. Die Drehscheibe dient als Übergangsbrücke zwischen zwei Wagen eines Gelenkfahrzeugs und muss alle auftretenden Bewegungen zwischen den zwei Wagen während der Fahrt ermöglichen, bzw. Belastungen durch Fahrgäste aufnehmen.

Gelenkfahrzeuge müssen bei ihrer Fahrt den unterschiedlichsten Bewegungen folgen können. So muss ein solches Fahrzeug insbesondere Knickbewegungen in der horizontalen Ebene ermöglichen, die auftreten, wenn ein solches Fahrzeug durch eine Kurve fährt. Darüber hinaus müssen Nickbewegungen (Winkelbewegung zur Vertikalen) ermöglicht werden, wie sie auftreten, wenn ein solches Fahrzeug über eine Kuppe oder durch eine Senke fährt. Im gewissen Umfang sollen auch Wankbewegungen (Torsion über die Längsachse) aufgenommen werden können, wie sie beispielsweise auftreten, wenn die Fahrzeuge gegeneinander verdreht werden. Darüber hinaus ist zu beachten, dass die beschriebenen Bewegungen auch einander überlagert auftreten können. Insbesondere im Bereich einer Drehscheibe ergeben sich bei Kurvenfahrt, also bei einer Knickbewegung und gegebenenfalls überlagerten Wank- und Nickbewegungen, überaus komplexe Bewegungsabläufe im Bereich der Drehscheibe.

Zur Aufnahme solcher Bewegungen ist es erforderlich, eine flexible Verbindung zwischen Bodenelementen herzustellen, insbesondere zwischen der nicht drehbar gelagerten Kante einer Drehscheibe und einem benachbarten, nicht zur Drehscheibe verdrehbaren Bodenelement.

Als eine Lösung ist bisher ein Gummiprofil bekannt, das auf benachbarte Kanten von Bodenelementen aufgesteckt wird und so zwei Bodenelemente oder auch ein Bodenelement mit einer Drehscheibe verbindet. Eine solche Profilverbindung, die beispielsweise in der Straßenbahn "Cobra" der Firma Bombardier eingesetzt wird, ist allerdings nur für eine Drehscheibe mit geringen Nick- und Wankbewegungsfreiheiten geeignet.

Die DE 19860557 C1 betrifft Innenausbaumodule für Reisezugwagen oder Reisebusse, gekennzeichnet durch L-förmige, vorgefertigte Segmente, deren längere L-Schenkel ein Seitenwandverkleidungssystem und deren kürzere L-Schenkel wenigstens anteilmäßig ein Fußbodensystem bilden. Fig. 4 der DE 19860557 C1 zeigt einen Stoß zwischen dem unteren L-Schenkel und der Fußbodenmittenplatte. Beide Teile überlappen sich an den Stößen zum Zwecke eines Toleranzausgleichs, wobei wenigstens die Fußbodenoberseite eben bleibt. Nach ihrer Ausrichtung werden die Teile verschraubt, vernietet oder sonst wie geeignet verbunden und der Stoß von einer Abdeckleiste verdeckt. Eine Verschraubung hat jedoch Nachteile bei der Montage und Wartung.

WO 86/00588 A1 betrifft eine Bodenplanke, insbesondere aus zusammengesetzten Profilen, wobei der Bodenplanke nach oben offene Rinnen eingeformt sind und in die Rinnen elastische Einlagen mit hintergreifenden Stegen eingelegt sind. Die Einlagen sind bündig mit der Ebene der Bodenplanke oder überragen diese etwas. Die Einlagen dienen als Gleitschutz und sind leicht einsetzbar bzw. wieder entfernbar, sind aber kein Verbindungselement für Bodenteile.

WO 2011/020245 A1 betrifft eine schwimmende Fußbodenstruktur eines Schienenfahrzeugs, die auf dem oberen Teil des Bodens des Schienenfahrzeugs montiert ist. Die Struktur umfasst ein oberes Stützelement, ein unteres Stützelement, einen dämpfenden Boden, der an dem oberen Stützelement befestigt ist, und ein elastisches Pufferelement, welches durch das obere Stützelement und das unteren Stützelement abgestützt ist. Eine Gleitschiene ist direkt mit dem oberen Stützelement verbunden. Der schwimmende Bodenaufbau verbessert die Lagerfähigkeit der Struktur und erhöht die Lebensdauer davon und eignet sich zum Einsatz in Schienenfahrzeugen. Es wird aber von WO 2011/020245 A1 kein Verbindungselement für Fußbodenteile angegeben, welche größeren Nick- und Wankbewegungen unterworfen sind.

Die EP 1854691 A schlägt eine Brücke mit Drehscheibe eines Übergangs zwischen zwei durch ein Gelenk miteinander verbundenen Fahrzeugen vor, bei der die Drehscheibe mit ihrem einen Ende durch ein elastisches Zwischenglied mit einer sogenannten Kuppelplatte des einen Fahrzeugs in Verbindung steht. Das elastische Zwischenglied, das aus einem Elastomer oder einem elastischen Kunststoff besteht, ist durch Verbindungsleisten jeweils mit der Kuppelplatte und der Drehscheibe verschraubt. Eine solche Verschraubung hat jedoch Nachteile bei der Montage und Wartung.

Eine Aufgabe der Erfindung bestand darin, die oben bezeichneten Probleme des Standes der Technik zu lösen. Insbesondere sollte ein Verbindungselement angegeben werden, das eine hohe mechanische Stabilität bei größeren Nick- und Wankbewegungen aufweist.

Diese Aufgabe wird mit einem Verbindungselement nach Anspruch 1 gelöst. In den Unteransprüchen zu Anspruch 1 sind besonders vorteilhafte Ausführungsformen angegeben.

Die Erfindung betrifft ein Verbindungselement zur Verbindung von Bodenelementen eines Fahrzeugs, insbesondere eines Schienenfahrzeugs, in Form eines Profils mit elastischen Eigenschaften, aufweisend
- eine Basis, die in eine Nut eines ersten Bodenelements einsteckbar ist
- eine nutförmige Ausnehmung zur Aufnahme eines nach unten weisenden Schenkels eines zweiten Bodenelements,
- eine erste Lippe zur oberseitigen Abdeckung eines Randbereichs des ersten Bodenelements,
- eine zweite Lippe zur oberseitigen Abdeckung eines Randbereichs des zweiten Bodenelements
wobei das Verbindungselement ein erstes Material, welches ein elastisches Material ist, und ein zweites Material aufweist, wobei das zweite Material eine höhere Steifigkeit aufweist als das erste Material, und wobei das Verbindungselement im Bereich der nutförmigen Ausnehmung das zweite Material und in anderen Bereichen das erste Material aufweist.

Das Verbindungselement ermöglicht eine Steckverbindung zwischen benachbarten Bodenelementen, insbesondere zwischen einer Drehscheibe und einem weiteren Bodenelement. Im Gegensatz zu Lösungen aus dem Stand der Technik, wo Drehscheiben mit benachbarten Bodenelementen oder einem elastischen Zwischenglied verschraubt sind, erlaubt die erfindungsgemäße Lösung eine besonders einfache Wartung und Montage/Demontage.

Gleichzeitig erlaubt das erfindungsgemäße Verbindungselement relativ große Winkelbewegungen von Elementen zueinander, insbesondere zur Vertikalen bei Fahrten eines Fahrzeugs über Kuppen oder durch Senken, und große Wankbewegungen (Torsion über die Längsachse des Fahrzeugs), bei gleichzeitig hoher Stabilität des Verbindungselements und geringem Verschleiß. Das Verbindungselement vereint Elastizität und Steifigkeitseigenschaften zur Erreichung der oben genannten Zwecke.

Der Begriff "Bodenelement" umfasst in dieser Beschreibung Drehscheiben und alle gängigen Bodenplatten. Auch sogenannte Brückenplatten oder Zwischenglieder, die im Bereich des Gelenks von Gelenkbussen oder Schienenfahrzeugen zwischen einer Drehscheibe und einer fest installierten Bodenplatte angeordnet sind, sind von dem Begriff umfasst. Das erfindungsgemäße Verbindungselement kann zur Verbindung aller möglichen Kombinationen von Bodenelementen verwendet werden. Insbesondere kann sie verwendet werden zur Verbindung einer Drehscheibe mit einem weiteren Bodenelement.

Der Begriff "Abdeckung eines Randbereichs" bedeutet mit Bezug auf die erste Lippe und das erste Bodenelement nicht zwingend auch eine Abdeckung der Nut eines ersten Bodenelements, die sich im Randbereich des ersten Bodenelements befindet. Die Nut nimmt die Basis des Verbindungselements auf und wird nicht zwingend auch von der ersten Lippe abgedeckt.

Die Begriffe "erstes Material" und "zweites Material" können auch bezeichnet werden als "Teil aus einem ersten Material" und "Teil aus einem zweiten Material".

Nach einer grundlegenden Idee ist das Verbindungselement aus mindestens zwei unterschiedlichen Materialien, anders ausgedrückt aus zwei Teilen aus unterschiedlichen

Materialien, gefertigt, wobei das erste Material die elastischen Eigenschaften bereitstellt, die für erforderliche Winkelbewegungen benötigt werden, und das zweite Material die benötigte Steifigkeit zur Erzielung von Stabilität und geringem Verschleiß. Die Steifigkeit beschreibt den Widerstand eines Körpers gegen Verformung durch eine Kraft oder ein Drehmoment. Sofern geometrieabhängig, bedeutet der Begriff "höhere Steifigkeit" eine höhere Steifigkeit des zweiten Materials gegenüber dem ersten Material bei gleicher Geometrie.

Vorzugsweise weist das zweite Material auch eine höhere Festigkeit auf als das erste Material. Die Festigkeit ist eine Werkstoffeigenschaft und beschreibt den mechanischen Widerstand, den ein Werkstoff einer plastischen Verformung oder Trennung entgegensetzt.

Die Aussage, dass der erste Material ein elastisches Material ist, bedeutet nicht, dass das zweite Material keinerlei elastische Eigenschaften aufweist, aber es bedeutet, dass das erste Material elastischer ist als das zweite Material und dass die elastischen Eigenschaften des Verbindungselements im Wesentlichen durch das erste Material bedingt sind.

Das Verbindungselement weist im Bereich der nutförmigen Ausnehmung, die einen nach unten weisenden Schenkel eines Bodenelements aufnimmt, das zweite Material mit vergleichsweise höherer Steifigkeit auf. Anders ausgedrückt ist das Verbindungselement im Bereich der nutförmigen Ausnehmung mit dem zweiten Material mechanisch verstärkt. Die nutförmige Ausnehmung befindet sich in dem zweiten Material, oder anders ausgedrückt werden die Wandungen der nutförmigen Ausnehmung aus dem zweiten Material gebildet.

Andere Bereiche des Verbindungselements, wie beispielsweise die erste und zweite Lippe und Bereiche der Basis, bestehen aus dem ersten Material mit elastischen Eigenschaften.

Die Nut des ersten Bodenelements, in welches die Basis des Verbindungselements einsteckbar ist, und der nach unten weisende Schenkel des zweiten Bodenelements verlaufen in Längsrichtung im Wesentlichen parallel. Somit verlaufen auch die nutförmige Ausnehmung in dem Verbindungselement und die Basis des Verbindungselements in Längsrichtung im Wesentlichen parallel.

Prinzipiell kann die Nut des ersten Bodenelements auf alle denkbaren Weisen an dem Bodenelement angebracht oder in dem Bodenelement eingelassen sein. In einer speziellen Ausführungsform wird die Nut des ersten Bodenelements aus drei Schenkeln gebildet, wobei einer der Schenkel mit einem weiteren Bestandteil des Bodenelements, wie beispielsweise einer Bodenplatte, verbunden sein kann. Die Schenkel können im Wesentlichen rechtwinklig zu einander stehen. In einer speziellen Ausführungsform ist der Nutgrund der Nut des ersten Bodenelements breiter als die Nutöffnung. Dies wird erreicht, indem die Schenkel in einem Winkel von weniger als 90° zueinander stehen.

Die nutförmige Ausnehmung des Verbindungselements ist vorzugsweise im Bereich der Basis des Verbindungselements angeordnet und von oben zugänglich.

In einer Ausführungsform der Erfindung liegt der nach unten weisende Schenkel des zweiten Bodenelements an den Wandungen der nutförmigen Ausnehmung des Verbindungselements an oder im Wesentlichen, mit minimalem Spiel, an. Anders ausgedrückt füllt der Schenkel dann die nutförmige Ausnehmung aus oder im Wesentlichen aus. In einer vorteilhaften Variante dieser Ausführungsform ist die Öffnung der nutförmigen Ausnehmung breiter als die Schlitzbreite der darunter liegenden nutförmigen Ausnehmung. Beispielsweise kann eine konische Aufweitung der Öffnung vorgesehen sein. Dadurch kann der nach unten weisende Schenkel leichter eingeführt werden und ein abgeknickter Bereich des Schenkels besser aufgenommen werden.

In einer anderen Ausführungsform ist die nutförmige Ausnehmung nach unten aufgeweitet. Dies bedeutet, dass die Breite der nutförmigen Ausnehmung ausgehend von der schlitzförmigen Öffnung der nutförmigen Ausnehmung in Richtung nach unten, d.h. in Richtung des Fahrgestells, zunimmt. Damit wird erreicht, dass der in die nutförmige Ausnehmung von oben eingeführte Schenkel des zweiten Bodenelements nicht vollständig an der Wandung der nutförmigen Ausnehmung anliegt und mit beweglich, mit Spiel, gelagert ist. Dadurch werden größere Winkelbewegungen des zweiten Bodenelements zur Vertikalen erleichtert. Vorzugsweise liegt in dieser Ausführungsform das Ende des Schenkels des zweiten Bodenelements nicht am Nutgrund der nutförmigen Ausnehmung an.

In einer speziellen Ausführungsform umgreift das erste Material das zweite Material, wobei ein Zugang zur nutförmigen Ausnehmung freigelassen ist. In einer noch spezielleren Ausführungsform weist das zweite Material im Querschnitt eine Kreisbogenform bzw. einen kreisbogenförmigen Umriss auf, mit einem Ausschnitt für die Öffnung der nutförmigen Ausnehmung. Wenn das zweite Material eine solche Kreisbogenform aufweist, weist das erste Material eine entsprechende kreisbogenförmige Ausnehmung bzw. eine Ausnehmung mit kreisbogenförmigem Umriss auf, in die das zweite Material formschlüssig eingesetzt wird.

Das zweite Material kann in dem ersten Material drehbar gelagert sein. Zwischen den beiden Materialen kann ein Gleitmaterial, beispielsweise eine Gleitschicht, angeordnet sein. Durch die drehbare Lagerung, die eine Relativbewegung des zweiten zum ersten Material ermöglicht, können Bodenplatten sehr einfach gegeneinander Winkelbewegungen zur Vertikalen vollziehen. Diese Ausführungsform ist vorteilhaft mit der weiter oben beschriebenen Ausführungsform kombinierbar, in der der Schenkel des zweiten Bodenelements an den Wandungen der nutförmigen Ausnehmung des Verbindungselements anliegt. Das zweite Material kann im Querschnitt eine Kreisbogenform aufweisen, wie zuvor erläutert, und drehbar im ersten Material gelagert sein.

Das Verbindungselement kann so ausgestaltet sein, dass ein nach unten weisender Schenkel eines zweiten Bodenelements in der nutförmigen Ausnehmung, die sich im zweiten Material befindet, fixierbar ist, beispielsweise mit einem Kleber.

In einer bevorzugten Ausführungsform des Verbindungselements ist das erste Material ein Elastomer, wie beispielsweise (Synthese)Kautschuk oder Gummi, und das zweite Material ein Thermoplast, vorzugsweise ein Polyamid.

Wie erwähnt, hat das Verbindungselement eine Profilform. Das erste und das zweite Material können zur Bildung des Profils coextrudiert werden. Es ist aber auch möglich, beide Materialen getrennt zu extrudieren und zu dem endgültigen Profil zusammen zu fügen, beispielsweise durch Pressen, wobei vorzugsweise das zweite Material in das erste eingepresst wird, oder durch Kleben.

In einer speziellen Ausführungsform umgreift das erste Material das zweite Material, das zweite Material befindet sich im Bereich der Verbindungselement-Basis, die in die Nut eines ersten Bodenelements einsteckbar ist. Beim Zusammenbau des Verbindungselements mit den Bodenplatten kann beispielsweise zunächst das erste Material, d.h. der aus dem ersten Material bestehende Teil des Verbindungselements, in die Nut eines ersten Bodenelements eingebracht werden. Der aus dem ersten Material bestehende Teil des Verbindungselements weist die erste und die zweite Lippe und die Basis auf, wobei die Außenseiten der Verbindungselement-Basis, die an den Nutwandungen der Nut des ersten Bodenelements anliegen, von dem ersten Material gebildet werden. Anschließend kann dann das zweite Material, d.h. der aus dem zweiten Material bestehende Teil des Verbindungselements, in das erste Material eingesetzt werden, z.B. eingepresst bzw. eingedrückt werden. Wie zuvor beschrieben, kann das zweite Material im Querschnitt eine Kreisbogenform aufweisen.

Entsprechend weist bei dieser Ausführungsform das erste Material eine, vorzugsweise komplementär geformte, kreisbogenförmige Ausnehmung auf, in die das zweite Material, z.B. ein Strang aus dem zweiten Material, eingesetzt wird. Insbesondere ist das zweite Material in dem ersten Material drehbar gelagert.

Speziell wird ein Verfahren zum Zusammenbau einer Anordnung aus einem ersten Bodenelement, einem zweiten Bodenelement und einem Verbindungselement, wie vorangehend beschrieben, angegeben, bei dem
- der aus dem ersten Material bestehende Teil des Verbindungselements in eine Nut des ersten Bodenelements eingebracht wird, wobei dieser Teil aus dem ersten Material die erste Lippe, die zweite Lippe und die Basis aufweist, und wobei die Basis in die Nut des ersten Bodenelements eingesteckt wird,
- in die nutförmige Ausnehmung, die in dem aus dem zweiten Material bestehenden Teil des Verbindungselements gebildet ist, ein nach unten weisender Schenkel des zweiten Bodenelements eingebracht wird,
- das Teil aus dem zweiten Material mit dem darin eingebrachten Schenkel des zweiten Bodenelements in den Teil aus dem ersten Material eingesetzt wird.

Die obigen Verfahrensschritte können, sofern möglich und sinnvoll, in unterschiedlicher zeitlicher Reihenfolge erfolgen.

Das Verbindungselement kann so ausgestaltet sein, dass das zweite Material das erste Material im Bereich der Verbindungselement-Basis aufweitet. Die Aufweitung kann erreicht werden, indem eine Ausnehmung im ersten Material, in die das zweite Material eingefügt wird, im Querschnitt kleiner bemessen ist als der Querschnitt des zweiten Materials, so dass das erste Material beim Einsetzen des zweiten Materials aufgeweitet wird. Dadurch wird die Basis des Verbindungselements aufgeweitet und ein besonders fester Sitz in der Nut des ersten Bodenelements erzielt. Beim Einsetzen des zweiten Materials in das erste Material wird das Verbindungselement-Profil im Bereich der Basis aufgeweitet und ein fester Sitz der Basis in der Nut des ersten Bodenelements erzielt.

In einer weiteren Variante ist die Basis des Verbindungselements sowohl von dem ersten Material als auch dem zweiten Material derart gebildet, dass die Außenseiten der Verbindungselement-Basis, die an den Nutwandungen der Nut des ersten Bodenelements anliegen, von dem ersten und dem zweiten Material gebildet werden. In diesem Fall sind das erste und das zweite Material beispielsweise an einer gemeinsamen Kante miteinander verbunden ohne dass das erste Material das zweite Material umgreift.

In einer Variante weist das Verbindungselement ein drittes Material auf, das eine höhere Steifigkeit aufweist als das erste Material, und das zwischen der ersten Lippe und der zweiten Lippe angeordnet ist, wobei die Lippen aus dem ersten Material bestehen. Das dritte Material dient der Stabilitätserhöhung des elastischen Profils zwischen der ersten und zweiten Lippe.

Das dritte Material kann mit den anderen Materialien zu einem Profil coextrudiert werden. Alternativ kann das Verbindungselement-Profil eine Ausnehmung zwischen der ersten und der zweiten Lippe aufweisen, in welche das dritte Material eingebracht wird, beispielsweise durch Einkleben, Einpressen oder Einklemmen. In einer bevorzugten Variante hat das dritte Material im Profilquerschnitt eine Keilform.

Wie oben bereits erwähnt, ist das erste Material ein elastisches Material. Das dritte Material kann ein Thermoplast sein, vorzugsweise Polyamid. Das dritte Material kann von seiner chemischen Beschaffenheit das gleiche Material sein, wie das zweite Material.

Die Erfindung betrifft auch eine Anordnung aus einem ersten Bodenelement, einem zweiten Bodenelement und einem Verbindungselement, wie zuvor beschrieben, wobei das Verbindungselement das erste mit dem zweiten Bodenelement verbindet. Eines der Bodenelemente ist vorzugsweise eine Drehscheibe. Die Anordnung kann auf verschiedene Art und Weise zusammengebaut werden. Beispielsweise kann zunächst die Basis des Verbindungselements in die Nut des ersten Bodenelements eingesteckt werden. Anschließend wird dann der nach unten weisende Schenkel des zweiten Bodenelements in die nutförmige Ausnehmung des Verbindungselements eingesteckt. Dazu wird, soweit wie erforderlich, die zweite Lippe angehoben. Der Zusammenbau kann aber auch in umgekehrter Reihenfolge erfolgen. Weitere spezielle Arten eines Zusammenbaus wurden weiter oben beschrieben. Der nach unten weisende Schenkel des zweiten Bodenelements kann in der nutförmigen Ausnehmung des Verbindungselements fixiert werden, beispielsweise mit einem Kleber.

Außerdem betrifft die Erfindung ein Schienenfahrzeug, aufweisend ein Verbindungselement wie zuvor beschrieben oder eine Anordnung wie zuvor beschrieben.

Mögliche Kombinationen aller zuvor beschriebenen Ausführungsformen und Aspekte werden ausdrücklich angeregt.

Nachfolgend wird die Erfindung anhand spezieller Ausführungsformen beschrieben. Es zeigen:
- Fig. 1: eine Anordnung aus einer Drehscheibe, Brückenelementen und einer Bodenplatte, die jeweils mit Verbindungselementen gemäß der Erfindung verbunden sind,
- Fig. 2: einen Schnitt durch ein Brückenelement, eine erste Ausführungsform eines Verbindungselements und eine Bodenplatte entlang der in Fig. 1 gezeigten Linie 1-1,
- Fig. 3: einen Schnitt durch ein Brückenelement, eine zweite Ausführungsform eines Verbindungselements und eine Bodenplatte entlang der in Fig. 1 gezeigten Linie 1-1.

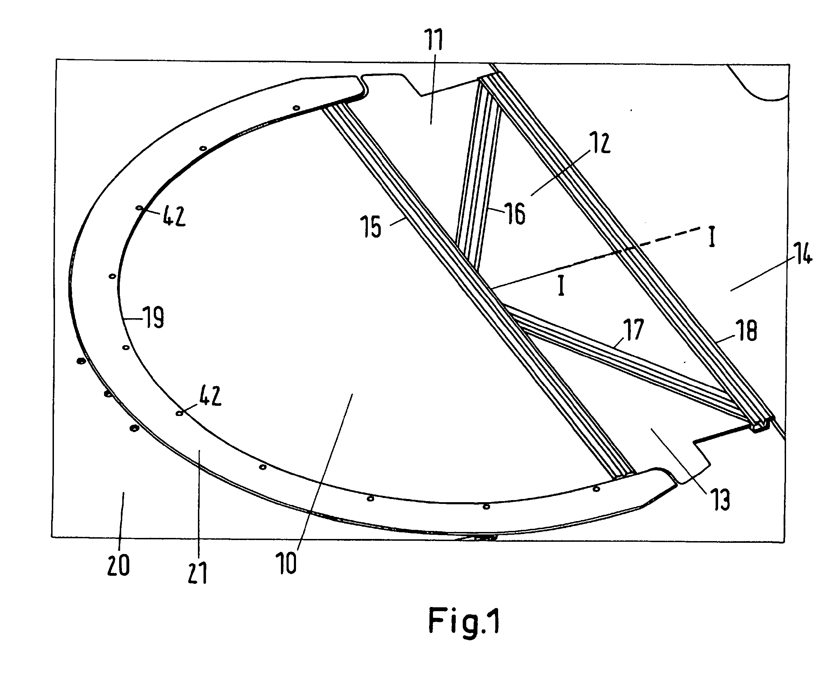

Die Anordnung in Fig. 1 ist im Bereich eines Übergangs zwischen zwei Wagen eines Schienenfahrzeugs angebracht. Sie besteht aus einer Drehscheibe 10, Brückenplatten 11, 12, 13 und Bodenplatten 14, 20. Die Drehscheibe 10, die Brückenplatten 11, 12, 13 und die Bodenplatte 14 sind untereinander mit Verbindungselementen 15, 16, 17, 18 verbunden. Die Bodenplatte 14 ist mit einem ersten Wagenkasten verbunden und die Bodenplatte 20 mit einem zweiten Wagenkasten. Die Drehscheibe ist an ihrer kreisbogenförmigen Kante 19 drehbar an der Bodenplatte 20 gelagert. Im Übergangsbereich zwischen der Drehscheibe 10 und der Bodenplatte 20 ist eine Spannleiste 21 vorgesehen, die den Übergang zwischen Drehscheibe 10 und Bodenplatte 20 überdeckt und durch Schrauben 42 an der Bodenplatte 20 fixiert ist.

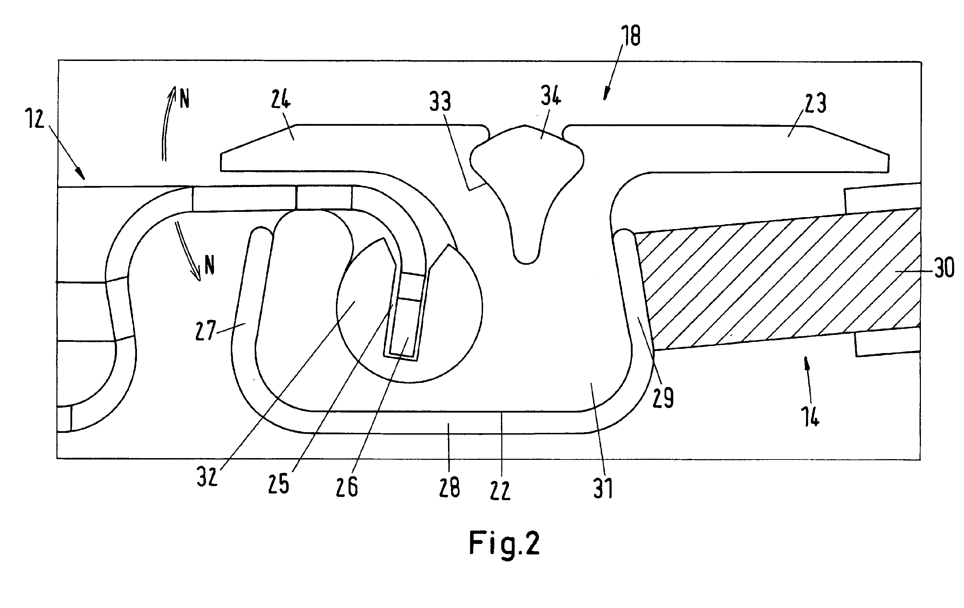

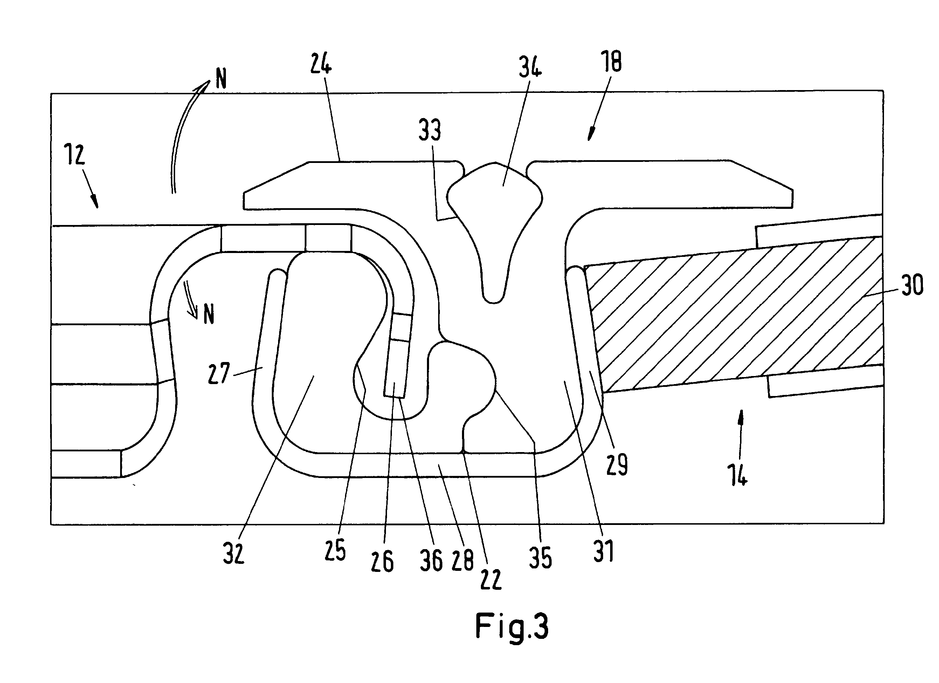

Fig. 2, ein Schnitt entlang der Linie 1-1 aus Fig. 1, zeigt die Brückenplatte 12, ein erfindungsgemäßes Verbindungselement 18 und die Bodenplatte 14. Das Verbindungselement 18 hat eine Profilform mit einer Basis 22, einer ersten Lippe 23, einer zweiten Lippe 24 und einer nutförmigen Ausnehmung 25 im Bereich der Basis 22 des Profils. In die nutförmige Ausnehmung ist ein nach unten weisender Schenkel 26 der Brückenplatte 12 eingesteckt und vorzugsweise darin verklebt. Zwischen dem Schenkel 26 und den Wandungen der nutförmigen Ausnehmung 25 ist etwas Zwischenraum zur Aufnahme eines Klebers. Die Lippe 24 deckt den Randbereich der Brückenplatte 12, der hier im Wesentlichen aus dem nach unten abgeknickten Schenkel 26 gebildet wird, ab. Die in der Figur gezeigten Spalte zwischen der Lippe 23 und der Bodenplatte 14 bzw. der Lippe 24 und der Brückenplatte 12 sind nicht obligatorisch. Die Lippen können auch direkt an den Platten anliegen. Das gleiche gilt für die Fig. 3.

Die Basis 22 des Verbindungselements 18 ist in eine Nut der Bodenplatte 14 eingesteckt. Die Nut der Bodenplatte 14 wird durch die Schenkel 27, 28, 29 gebildet, welche die Basis 22 des Profils umschließen. In der gezeigten Ausführungsform ist der Nutgrund der Nut des ersten Bodenelements breiter als die Nutöffnung, da die Schenkel 27, 28, 29 in einem Winkel von weniger als 90° zueinander stehen. Dies gibt der Basis 22 einen festen Halt in der Nut. Der Schenkel 29 ist mit dem tragenden Element 30 der Bodenplatte 14 verbunden. Die Lippe 23 deckt einen Randbereich der Bodenplatte 14, in diesem Fall des tragenden Elements 30, ab.

Das Verbindungselement besteht aus einem ersten elastischen Material 31 (bzw. Teil aus einem ersten elastischen Material 31) und einem zweiten Material 32 (bzw. Teil aus einem zweiten Material 32) mit höherer Steifigkeit. Das Teil aus dem zweiten Material 32 ist ein Strang mit kreisbogenförmigem Querschnitt, in den die nutförmige Ausnehmung 25 von oben eingelassen ist. In der hier gezeigten Ausführungsform umgreift das erste Material 31 das zweite Material 32, wobei die Öffnung 40 der nutförmigen Ausnehmung 25 zur Aufnahme des Schenkels 26 freigelassen ist. Die Öffnung 40 ist durch eine konische Aufweitung breiter als die Schlitzbreite der darunter liegenden nutförmigen Ausnehmung 25. Das zweite Material befindet sich in einer kreisbogenförmigen Ausnehmung 37 im ersten Material. In dieser Ausführungsform ist das Teil aus dem zweiten Material 32 drehbar im Teil aus dem ersten Material 31 angeordnet. Durch die Drehbarkeit sind die Brückenplatte 12 und die Bodenplatte 14, die durch das Verbindungselement 18 miteinander verbunden sind, leicht zueinander im Sinn einer Nickbewegung beweglich. Das zweite Material kann alternativ auch unbeweglich in dem ersten Material fixiert sein.

Die Außenseiten der Profilbasis 22, d.h. die Seiten, die an den Schenkeln 27, 28, 29 umgriffen werden, werden von dem ersten Material gebildet.

In eine Ausnehmung 33 zwischen der ersten Lippe 23 und der zweiten Lippe 24 ist ein Strang eines dritten Materials 34 eingepresst, der im Querschnitt eine Keilform aufweist. Das dritte Material weist eine höhere Steifigkeit auf als das erste Material 31.

Zum Lösen der Steckverbindung wird zunächst der keilförmige Strang aus dem dritten Material 34 aus der Ausnehmung 33 herausgezogen. Dann wird die Lippe 24 nach oben geklappt, was durch die Ausnehmung 33 leicht möglich ist. Danach wird die Brückenplatte 12, bzw. deren Schenkel 26 aus dem Verbindungselement herausgezogen.

Wenn der Schenkel 26 mit dem Teil aus dem zweiten Material 32 verklebt ist, und das Teil 32 drehbar in dem Teil aus dem ersten Material 31 angeordnet ist - 31 und 32 also nicht fest verbunden sind, wird auch das Teil 32 zusammen mit dem Schenkel 26 aus dem Verbindungselement 18 herausgezogen. Danach sind die Platten 12 und 14 getrennt und die Platte 12 kann nach oben angehoben werden.

Falls erwünscht, zum Lösen der Verbindung zwischen den Platten 12 und 14 aber nicht erforderlich, kann die Basis 22 des Verbindungsteils 10 aus der aus den Schenkeln 27, 28, 29 gebildeten Nut gezogen werden, beispielsweise durch Anfassen an den Lippen 23, 24 und Ziehen nach oben.

Der Zusammenbau der Steckverbindung kann in umgekehrter Reihenfolge erfolgen wie oben beschrieben.

Der aus dem ersten Material 31 bestehende Teil des Verbindungselements 18 kann in die Nut des ersten Bodenelements 14 eingebracht werden, wobei dieser Teil aus dem ersten Material 31 die erste Lippe 23, die zweite Lippe 24 und die Basis 22 aufweist, und wobei die Basis 22 in die Nut des ersten Bodenelements 14 eingesteckt wird. Dann kann in die nutförmige Ausnehmung 25, die in dem aus dem zweiten Material 32 bestehenden Teil des Verbindungselements 18 gebildet ist, der nach unten weisende Schenkel 26 des zweiten Bodenelements 12 eingebracht werden. Insbesondere wird der Schenkel in die nutförmige Ausnehmung 25 eingeklebt. Schließlich kann das Teil aus dem zweiten Material 32 mit dem darin eingebrachten Schenkel 26 des zweiten Bodenelements 12 in den Teil aus dem ersten Material 31 eingesetzt werden, wobei das erste Material 31 das zweite Material 32 umgreift. Vorzugsweise bleibt das zweite Material 32 in dem ersten Material 31 drehbar. Die obigen Verfahrensschritte können, sofern möglich und sinnvoll, in unterschiedlicher zeitlicher Reihenfolge erfolgen. Man erhält die in der Fig. 2 gezeigte Anordnung.

Der Zusammenbau des Verbindungselements 18 mit der Brückenplatte 12 und der Bodenplatte 14 kann alternativ auch so erfolgen, dass man zuerst den aus erstem Material 31 bestehenden Teil in die aus den Schenkeln 27, 28, 29 gebildete Nut einsteckt und anschließend den aus zweitem Material 32 bestehenden Teil in das erste Material, d.h., in die kreisbogenförmige Ausnehmung 37 einpresst, wozu die Lippe 24 so weit angehoben wird wie erforderlich. Dadurch kann die Basis 22 aufgeweitet werden, je nach Dimensionierung der Ausnehmung, und sitzt fest in der Nut. Danach kann der Schenkel 26 in die nutförmige Vertiefung eingesetzt werden, wozu die Lippe 24 so weit angehoben wird wie erforderlich.

In Fig. 3 ist eine weitere Ausführungsform eines Verbindungselements gezeigt. Gleiche Bestandteile wie in der ersten Ausführungsform gemäß Fig. 2 sind mit identischen Bezugszeichen gekennzeichnet. Im Unterschied zur Ausführungsform nach Fig. 2 wird das zweite Material 32 nicht vom ersten Material 31 umgriffen. Die Außenseiten der Profilbasis, d.h. die Seiten, die an den Schenkeln 27, 28, 29 umgriffen werden, werden sowohl von dem ersten Material 31 als auch dem zweiten Material 32 gebildet, welche an einer gemeinsamen Kante 35 miteinander verbunden sind und zusammen die Profilbasis 22 bilden. In dieser Ausführungsform können beispielsweise beide Materialien 31, 32 coextrudiert sein und die Profilbasis wird anschließend in die aus den Schenkeln 27, 28, 29 gebildete Nut gepresst.

Ein weiterer Unterschied zur Ausführungsform nach Fig. 2 besteht darin, dass die nutförmige Ausnehmung 25 im Verbindungselement 18 nach unten, in Richtung des Endes 36 des Schenkels 26 hin, aufgeweitet ist und der in die nutförmige Ausnehmung von oben eingeführte Schenkel 26 nicht vollständig an der Wandung der nutförmigen Ausnehmung anliegt. Zudem liegt das Ende 36 des Schenkels 26 nicht am Nutgrund an. Dadurch kann der Schenkel 26 und die mit ihm verbundene Brückenplatte 12 besonders große Nickbewegungen (Winkelbewegung zur Vertikalen) gegenüber der Bodenplatte 14 vollziehen. In dieser Ausführungsform ist der Schenkel 26 nicht in der nutförmigen Ausnehmung fixiert, insbesondere nicht eingeklebt. Die Winkelbewegungen der Brückenplatte 12 gegenüber der Bodenplatte 14 sind durch Pfeile N angedeutet.

Die gezeigten Ausführungsformen eines Verbindungselements sind nicht auf das in Fig. 1 gezeigte Verbindungselement 18 beschränkt. Die Verbindungselemente 15, 16 und 17 können genauso gestaltet sein.

## Patentansprüche

1. Verbindungselement (18) zur Verbindung von Bodenelementen (12, 14) eines Fahrzeugs, insbesondere eines Schienenfahrzeugs, in Form eines Profils mit elastischen Eigenschaften, aufweisend
- eine Basis (22), die in eine Nut eines ersten Bodenelements (14) einsteckbar ist,
- eine nutförmige Ausnehmung (25) zur Aufnahme eines nach unten weisenden Schenkels (26) eines zweiten Bodenelements (12),
- eine erste Lippe (23) zur oberseitigen Abdeckung eines Randbereichs des ersten Bodenelements (14),
- eine zweite Lippe (24) zur oberseitigen Abdeckung eines Randbereichs des zweiten Bodenelements (12),
wobei das Verbindungselement ein erstes Material (31), welches ein elastisches Material ist, und ein zweites Material (32) aufweist, wobei das zweite Material eine höhere Steifigkeit aufweist als das erste Material, und wobei das Verbindungselement im Bereich der nutförmigen Ausnehmung (25) das zweite Material und in anderen Bereichen das erste Material aufweist.

2. Verbindungselement nach Anspruch 1, bei dem das erste Material (31) ein Elastomer ist und das zweite Material (32) ein Thermoplast ist.

3. Verbindungselement nach Anspruch 2, bei dem der Thermoplast ein Polyamid ist.

4. Verbindungselement nach einem der vorangehenden Ansprüche, bei dem die nutförmige Ausnehmung (25) nach unten aufgeweitet ist.

5. Verbindungselement nach einem der vorangehenden Ansprüche, aufweisend ein drittes Material (34), das eine höhere Steifigkeit aufweist als das erste Material (31), und das zwischen der ersten Lippe (23) und der zweiten Lippe (24) angeordnet ist, wobei die Lippen (23, 24) aus dem ersten Material (31) bestehen.

6. Verbindungselement nach einem der vorangehenden Ansprüche, bei dem das erste Material (31) das zweite Material (32) umgreift, wobei ein Zugang zur nutförmigen Ausnehmung (25) freigelassen ist.

7. Verbindungselement nach Anspruch 6, bei dem das zweite Material (32) in dem ersten Material (31) drehbar gelagert ist.

8. Anordnung aus einem ersten Bodenelement (14), einem zweiten Bodenelement (12) und einem Verbindungselement (18), wie in einem der Ansprüche 1 - 7 beschrieben, das diese miteinander verbindet.

9. Anordnung nach Anspruch 8, bei der eines der Bodenelemente eine Drehscheibe ist.

10. Schienenfahrzeug, aufweisend ein Verbindungselement nach einem der Ansprüche 1 - 7 oder eine Anordnung nach Anspruch 8 oder 9.

11. Verfahren zum Zusammenbau einer Anordnung aus einem ersten Bodenelement (14), einem zweiten Bodenelement (12) und einem Verbindungselement (18), wie in einem der Ansprüche 1 - 7 beschrieben, bei dem
- der aus dem ersten Material (31) bestehende Teil des Verbindungselements (18) in eine Nut des ersten Bodenelements (14) eingebracht wird, wobei dieser Teil aus dem ersten Material (31) die erste Lippe (23), die zweite Lippe (24) und die Basis (22) aufweist, und wobei die Basis (22) in die Nut des ersten Bodenelements (14) eingesteckt wird,
- in die nutförmige Ausnehmung (25), die in dem aus dem zweiten Material (32) bestehenden Teil des Verbindungselements (18) gebildet ist, ein nach unten weisender Schenkel (26) des zweiten Bodenelements (12) eingebracht wird,
- das Teil aus dem zweiten Material (32) mit dem darin eingebrachten Schenkel (26) des zweiten Bodenelements (12) in den Teil aus dem ersten Material (31) eingesetzt wird.

12. Verwendung eines Verbindungselements, wie in einem der Ansprüche 1-7 beschrieben, zur Verbindung einer Drehscheibe (10) im Bereich eines Fahrzeuggelenks mit einem oder mehreren weiteren Bodenelementen (11, 13).

## Claims

1. Connecting element (18) for connecting floor elements (12, 14) of a vehicle, in particular of a rail vehicle, in the form of a profile having elastic properties, comprising
- a base (22) which can be inserted into a groove of a first floor element (14),
- a groove-shaped recess (25) for receiving a downward-pointing leg (26) of a second floor element (12),
- a first lip (23) for covering the top of an edge area of the first floor element (14),
- a second lip (24) for covering the top of an edge area of the second floor element (12),
wherein the connecting element comprises a first material (31), which is an elastic material, and a second material (32), wherein the second material has a higher rigidity than the first material, and wherein the connecting element comprises the second material in the area of the groove-shaped recess (25) and the first material in other areas.

2. Connecting element according to claim 1, in which the first material (31) is an elastomer and the second material (32) is a thermoplastic.

3. Connecting element according to claim 2, in which the thermoplastic is a polyamide.

4. Connecting element according to any one of the preceding claims, in which the groove-shaped recess (25) is widened in the downward direction.

5. Connecting element according to any one of the preceding claims, comprising a third material (34) which has a higher rigidity than the first material (31) and which is arranged between the first lip (23) and the second lip (24), wherein the lips (23, 24) are made of the first material (31).

6. Connecting element according to any one of the preceding claims, in which the first material (31) surrounds the second material (32), wherein an access to the groove-shaped recess (25) is left free.

7. Connecting element according to claim 6, in which the second material (32) is mounted in the first material (31) such as to be able to rotate.

8. Arrangement consisting of a first floor element (14), a second floor element (12) and a connecting element (18), as described in any one of claims 1 to 7, which connects said floor elements to one another.

9. Arrangement according to claim 8, in which one of the floor elements is a turntable.

10. Rail vehicle, comprising a connecting element according to one of claims 1 to 7 or an arrangement according to claim 8 or 9.

11. Method for assembling an arrangement consisting of a first floor element (14), a second floor element (12) and a connecting element (18), as described in any one of claims 1 to 7, in which
- the part of the connecting element (18) made of the first material (31) is inserted into a groove of the first floor element (14), wherein this part made of the first material (31) comprises the first lip (23), the second lip (24) and the base (22), and wherein the base (22) is inserted into the groove of the first floor element (14),
- a downward-pointing leg (26) of the second floor element (12) is inserted into the groove-shaped recess (25) which is formed in the part of the connecting element (18) made of the second material (32),
- the part made of the second material (32) with the leg (26) of the second floor element (12) inserted therein is inserted into the part made of the first material (31).

12. Use of a connecting element, as described in any one of claims 1 to 7, for connecting a turntable (10) in the area of a vehicle articulation to one or more further floor elements (11, 13).

## Revendications

1. Elément d'assemblage (18) servant à assembler des éléments de sol (12, 14) d'un véhicule, en particulier d'un véhicule ferroviaire, sous la forme d'un profilé présentant des caractéristiques élastiques, présentant
- une base (22), qui peut être enfichée dans une rainure d'un premier élément de sol (14),
- un évidement (25) en forme de rainure servant à recevoir une branche (26), orientée vers le bas, d'un deuxième élément de sol (12),
- une première lèvre (23) servant à recouvrir côté supérieur une zone de bord du premier élément de sol (14),
- une deuxième lèvre (24) servant à recouvrir côté supérieur une zone de bord du deuxième élément de sol (12),
sachant que l'élément d'assemblage présente un premier matériau (31) qui est un matériau élastique et un deuxième matériau (32), sachant que le deuxième matériau présente une rigidité plus importante que le premier matériau, et sachant que l'élément d'assemblage présente dans la zone de l'évidement (25) en forme de rainure le deuxième matériau et dans d'autres zones le premier matériau.

2. Elément d'assemblage selon la revendication 1, dans le cadre duquel le premier matériau (31) est un élastomère et le deuxième matériau (32) est une matière thermoplastique.

3. Elément d'assemblage selon la revendication 2, dans le cadre duquel la matière thermoplastique est un polyamide.

4. Elément d'assemblage selon l'une quelconque des revendications précédentes, dans le cadre duquel l'évidement (25) en forme de rainure est élargi vers le bas.

5. Elément d'assemblage selon l'une quelconque des revendications précédentes, présentant un troisième matériau (34), qui présente une rigidité plus importante que le premier matériau (31) et qui est disposé entre la première lèvre (23) et la deuxième lèvre (24), sachant que les lèvres (23, 24) sont constituées du premier matériau (31).

6. Elément d'assemblage selon l'une quelconque des revendications précédentes, dans le cadre duquel le premier matériau (31) enveloppe le deuxième matériau (32), sachant qu'un accès à l'évidement (25) en forme de rainure est laissé libre.

7. Elément d'assemblage selon la revendication 6, dans le cadre duquel le deuxième matériau (32) est logé de manière à pouvoir tourner dans le premier matériau (31).

8. Ensemble composé d'un premier élément de sol (14), d'un deuxième élément de sol (12) et d'un élément d'assemblage (18), tel que cela est décrit dans l'une quelconque des revendications 1 à 7, lequel élément d'assemblage relie lesdits éléments de sol entre eux.

9. Ensemble selon la revendication 8, dans le cadre duquel un des éléments de sol est un disque rotatif.

10. Véhicule ferroviaire, présentant un élément d'assemblage selon l'une quelconque des revendications 1 à 7, ou un ensemble selon la revendication 8 ou 9.

11. Procédé servant à construire un ensemble à partir d'un premier élément de sol (14), d'un deuxième élément de sol (12) et d'un élément d'assemblage (18), tel que cela est décrit dans l'une quelconque des revendications 1 à 7, dans le cadre duquel
- la partie constituée du premier matériau (31) de l'élément d'assemblage (18) est introduite dans une rainure du premier élément de sol (14), sachant que cette partie constituée du premier matériau (31) présente la première lèvre (23), la deuxième lèvre (24) et la base (22), et sachant que la base (22) est enfichée dans la rainure du premier élément de sol (14),
- une branche (26), orientée vers le bas, du deuxième élément de sol (12) est introduite dans l'évidement (25) en forme de rainure, qui est formé dans la partie de l'élément d'assemblage (18) constituée du deuxième matériau (32),
- la partie constituée du deuxième matériau (32), dans laquelle est introduite la branche (26) du deuxième élément de sol (12), est insérée dans la partie constituée du premier matériau (31).

12. Utilisation d'un élément d'assemblage, tel que cela est décrit dans l'une quelconque des revendications 1 à 7, servant à assembler un disque rotatif (10) dans la zone d'une articulation de véhicule à un ou à plusieurs autres éléments de sol (11, 13).
